# EUROPEAN PATENT APPLICATION

(11) **EP 4 502 867 A1**
(43) Date of publication of application: **05.02.2025**
(21) Application number: 23382822.7
(22) Date of filing: 04.08.2023
(51) Int. Cl.: G06K 19/077

(54) **CARD-LIKE DATA CARRIER AND METHODS FOR MANUFACTURING A CARD-LIKE DATA CARRIER**

(71) Applicant: Giesecke+Devrient ePayments GmbH, 81677 München (DE)
(72) Inventor: FERNANDEZ, Oscar Miguel, 81677 München (DE); TARANTINO, Thomas, 81677 München (DE); KOHL, Klaus, 81677 München (DE); TARANTINO, Peter, 81677 München (DE)
(74) Representative: LKGLOBAL Lorenz & Kopf Patentanwalt Attorney at Law PartG mbB

(57) **Abstract**

The invention relates to a card-like data carrier (1). The card-like data carrier (1) comprises a card body (10) having an integrated light source (11) and a visualization area (12) provided on a surface (13) of the card body (10) by a surface treatment process. The visualization area (12) comprises a light transmitting portion (14) through which a light generated by the light source (11) is transmitted to an outside of the card-like data carrier (1) and a light blocking portion (16) which prevents a light generated by the light source (11) from being transmitted to the outside of the card-like data carrier (1). When the light source (11) is activated, the visualization area (12) visualizes an information of the card-like data carrier (1) based on the light transmitted through the light transmitting portion (14). The invention also relates to multiple methods for manufacturing a card-like data carrier.

## Description

### Technical Field

The disclosure generally relates to manufacturing techniques for card-like data carriers with an integrated light source. In particular, the invention relates to a card-like data carrier and multiple methods for manufacturing a card-like data carrier.

### Technical Background

Data carrier cards are used in various different applications. For example, bank cards like credit cards are used as payment cards which allow a user of the bank card to pay for purchased goods or services. Such data carrier cards are often manufactured in a standardized format and usually include different layers of plastic materials which are bonded to each other to provide a stack of layers. For example, the layers may be manufactured from polyvinylchloride (PVC), polyethylene terephthalate (PET), etc. Some data carrier cards also comprise an integrated light source. The light source may be used to irradiate light in a shaped body embedded within the plastic material of the card body. The form of the shaped body within the card body defines the contours of a graphical element which is to be displayed using the light source. However, the manufacturing of such data carrier cards with integrated light source might still not be satisfactory. In particular, the graphical element to be displayed using the light source is manufactured during the cardy body manufacturing process. There is no possibility for providing contours of a graphical element or other information to be lit up using the light source after the card body and thus the data carrier card has been manufactured.

### Summary

It may be seen as an object of the invention to improve the manufacturing of card-like data carriers with integrated light source.

A card-like data carrier and methods according to the features of the independent claims are provided. Further embodiments are evident from the dependent claims and from the following description.

According to an aspect, a card-like data carrier is provided. The card-like data carrier comprises a card body having an integrated light source. The card-like data carrier further comprises a visualization area provided on a surface of the card body using a surface treatment process. The visualization area comprises a light transmitting portion through which a light generated by the light source is transmittable to an outside of the card-like data carrier. The visualization area also comprises a light blocking portion which is configured to prevent a light generated by the light source from being transmitted to the outside of the card-like data carrier. When the light source is in an activated state, the visualization area is configured to visualize an information, e.g., a visualization information, of the card-like data carrier based on the light transmitted through the light transmitting portion.

The inventive card-like data carrier may be seen as a card-like data carrier to which information, like a personalization information or a logo, is provided by means of a treatment of the surface of the card body of the card-like data carrier. In this manner, the card-like data carrier can be provided with personalized information after the card body including the light source and all lamination layers of the card body have been manufactured. The inventive card-like data carrier may thus not require a manufacturing technique in which the graphical elements to be lit up by the light source must be manufactured during the card body manufacturing. Instead, the inventive card-like data carrier provides an approach for which a surface treatment on the completely manufactured card body may be used to provide graphical elements to be lit up by the light source. This is particularly advantageous for card-like data carriers with integrated light source which are to be personalized after the card body has already been manufactured. As will be described in more detail below, multiple methods can be used to manufacture such a card-like data carrier.

The card body of the card-like data carrier may include a laminated structure in which several layers are stacked one upon the other during a card body manufacturing process. During this card body manufacturing process, the light source may be integrated into the card body, for example in a recess inside the layered structure of the card body. The card body may further include light transmissive parts such that light generated by the light source can be transmitted inside the card body. The light transmissive parts may extend between the light source and the surface of the card body. The card body may further comprise an integrated circuit and/or an antenna element. Furthermore, the card body may include a contact interface and/or a non-contact interface for communication with an external device.

The light source may be a light-emitting diode (LED) or any other light source which emits light. The light source may be embedded in a recess within the layered structure of the card body or may be a flat element which extends of the surface of the card body. The light source can be supplied with electrical energy from an electrical energy source like a battery unit of the card-like data carrier or with electrical energy from an external device after the card-like data carrier has been arranged in the vicinity of the card-like data carrier. For example, the external device may generate an electromagnetic field acting on a circuitry or antenna element of the card-like data carrier, thereby delivering the electrical energy required to power the light source of the card-like data carrier. The external device may for instance be a mobile device, like a mobile phone, etc. In another example, the light source is powered when the card-like data carrier is presented to a point-of-sale (POS) workstation. In particular, the information will light up and will thus be visualized when the card-like data carrier is presented at a point-of-sale (POS) workstation or to any other device which can provide power to the light source.

The visualization area may be arranged on the surface of the card body. That is, the visualization area might not be associated with any structure of the card body but may instead be defined only by treatments on the surface of the card-body. For example, card body has a first (upper) surface and a second (lower) surface. The visualization area may be present on one or both of these surfaces, wherein the card body does not include any of the visualization information to be lit up using the light source. In other words, the structure and/or shape and/or appearance of the information provided by the visualization area might not be defined by any element of the card body, but instead by structures or shapes that were applied on or onto the surface of the card body. This allows to apply the information, like personalization information and/or a logo, after the card body has been completely manufactured. No intervention with the inside of the card body is required to provide or adjust the information.

The light transmitting portion which is configured to transmit the light generated by the light source to the outside of the card-like data carrier, for example to a user of the card-like data carrier, may comprise a transparent material or an at least partially transparent material. The light transmitting portion may comprise a material which is activatable and can be made transparent during the surface treatment process.

The light blocking portion which is configured to prevent light generated by the light source from being transmitted to the outside of the card-like data carrier may comprise a non-transparent or an opaque material. It is possible that the inside of the card body has light transmissive parts that enable the light from the light source to be distributed within large part of the card body. An opaque layer on the surface of the card body may block or prevent this light from exiting the card body such that the portions on the surface of the card body being defined by the light transmitting portion become visible to the user of the card-like data carrier. In particular, when the light source is being activated, the information may be displayed or shown in the visualization area. The visualization area may be provided on the surface of the card body by means of a printing process.

In an example, the card-like data carrier as described herein may be used as a chip-card, a payment card, a smart card or an identification card.

According to an embodiment, the visualization area is a personalization area which is configured to visualize a personalization information when the light source is in the activated state.

The personalization information may include a number or letter sequence that is specific for each individual card-like data carrier. For example, the personalization information is an account number of a user, a name of a user, an expiry date, a card validation code (CVC) or one or more optical elements like a company logo.

According to an embodiment, the light blocking portion of the visualization area is defined by a printed layer, wherein the light transmitting portion of the visualization area is defined by an opening in the printed layer.

The printed layer may include an artwork applied on the surface of the card body. The artwork may be applied as a layer on the surface. The light blocking portion may cover a first part of the card body surface and the light transmitting portion may cover a second part of the card body surface. The light can thus be transmitted through the opening in the printed layer. In an example, the transmitting portion of the visualization area is defined by multiple openings in the printed layer, wherein the shape of the openings may represent or define the personalization information or the logo in the visualization area. The printed layer may be provided by a printing process and the openings may represent an area which is left free from print during the printing process. In other words, a complete artwork is printed on the surface of the card body, e.g., with drop on demand technology, and in the area of the personalization information or logo the artwork is not printed. As a result, the light can be transmitted through the recess area, i.e., the opening(s) in the artwork layer.

According to an embodiment, the opening in the printed layer is provided using a milling process and/or an engraving process.

This means that the printed layer, e.g., the artwork layer, may be provided on the surface of the card body, for example on the entire upper surface of the card body. The opening(s) in the artwork layer can then be milled or engraved in the artwork layer, thereby providing the opening(s) in the artwork layer. The manufacturing of the visualization area can thus be carried out after the card body has been completely manufactured. In other words, a mere surface treatment of the card body is carried out to provide the visualization information.

According to an embodiment, the light blocking portion of the visualization area is defined by an opaque portion of an ink material layer, wherein the light transmitting portion of the visualization area is defined by a transparent portion of the ink material layer.

In particular, the light blocking portion may comprise an opaque material and the light transmitting portion may comprise a transparent material. It is possible that the light transmitting properties of the light transmitting portion may be activated during the manufacturing process. For example, during the production of the card like data carrier, the printed artwork includes an area on the surface of the card body which has no artwork printed thereon, but instead has a special ink which can be made transparent or change the color by heat application or laser beam treatment. In this case, a thermochromic ink may be used which irreversibly changes its properties to a transparent or differently colored medium.

According to an embodiment, the visualization area comprises a printed layer and a pigmented layer, wherein the pigmented layer is arranged between the card body and the printed layer.

For example, the card-like data carrier may comprise a plastic layer which includes pigments which change from opaque to transparent. The pigments may be present in a foil, for example distributed within the entire foil or only within parts thereof. It is again possible that the light transmitting properties of the pigmented layer may be activated during the manufacturing process, thereby changing the material properties from opaque to transparent.

According to an aspect, a method for manufacturing a card-like data carrier is provided. A step of the method comprises providing a card body with an integrated light source. A further step comprises applying a printed layer onto a surface of the card body. A further step comprises removing at least one portion of the printed layer from the surface of the card body in order to provide at least one opening in the printed layer through which a light generated within the card body is transmittable to an outside of the card body. The method steps may be performed in the indicated order.

According to another aspect, an alternative method for manufacturing a card-like data carrier is provided. A step of the method comprises providing a card body with an integrated light source. A further step comprises applying a printed layer onto a portion of a surface of the card body, while maintaining at least one non-printed portion of the surface of the card body, wherein the at least one non-printed portion of the surface of the card body is configured to transmit a light generated within the card body to an outside of the card body. The method steps may be performed in the indicated order.

According to another aspect, an alternative method for manufacturing a card-like data carrier is provided. A step of the method comprises providing a card body with an integrated light source. A further step comprises applying an ink material layer onto a surface of the card body. A further step comprises treating a portion of the ink material layer to change a light transmission property of said portion of the ink material layer. The method steps may be performed in the indicated order.

According to another aspect, an alternative method for manufacturing a card-like data carrier is provided. A step of the method comprises providing a card body with an integrated light source. A further step comprises providing a pigmented layer onto a surface of the card body. A further step comprises providing a printed layer onto the pigmented layer such that the printed layer includes at least one opening. A further step comprises treating the pigmented layer to change a light transmission property of the pigmented layer. The method steps may be performed in the indicated order.

The above-described methods provide alternative solutions for an improved manufacturing of card-like data carriers with integrated light source.

### Brief description of the drawings

The present invention will hereinafter be described in conjunction with the following drawing figures, wherein like numerals denote like elements, and wherein:
- Fig. 1: shows a top view of a card-like data carrier with a visualization area.
- Fig. 2: shows a cross-sectional view of a card-like data carrier during a surface treatment in a manufacturing process.
- Fig. 3: shows a cross-sectional view of a card-like data carrier after a manufacturing process.
- Fig. 4: shows a top view of a card-like data carrier including a visualization area formed by an ink material layer.
- Fig. 5: shows a top view of a card-like data carrier including a visualization area formed by a pigmented layer and a printed layer.
- Fig. 6: shows a cross-sectional view of a card-like data carrier including a visualization area formed by a pigmented layer and a printed layer.
- Fig. 7: shows a flow diagram of a method for manufacturing a card-like data carrier.
- Fig. 8: shows a flow diagram of an alternative method for manufacturing a cardlike data carrier.
- Fig. 9: shows a flow diagram of another alternative method for manufacturing a card-like data carrier.
- Fig. 10: shows a flow diagram of another alternative method for manufacturing a card-like data carrier.

### Detailed description of exemplary embodiments

The representations and illustrations in the drawings may be schematic and not to scale. A better understanding of the card-like data carrier and the methods described above may be obtained through a review of the shown illustrations together with a review of the detailed description that follows.

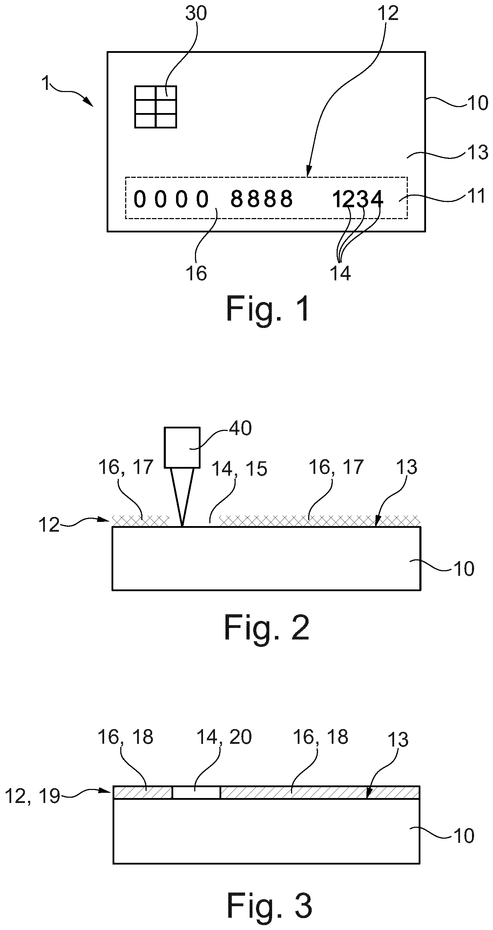

Fig. 1 shows a top view of a card-like data carrier 1 with a visualization area 12 that is configured to visualize a personalization information or a logo on the card-like data carrier 1 when a light source 11 integrated within the card-like data carrier 1 is switched on. The card-like data carrier 1 comprises a card body 10 in which the integrated light source 11 incorporated. It is noted that the indication of the light source 11 in Fig. 1 is merely schematic. In particular, in the top view of Fig. 1, the light source 11 may be located inside the card body 10 and, itself, is not visible and covered by parts of the card body 10. Thus, Fig. 1 may be regarded to show an example as to which area on the surface 13 may be illuminated by the light source 11 and, accordingly, which area on the surface 13 may represent the visualization area 12 in which visualization information like personalization information or a logo can be visualized.

The visualization area 12 is arranged on the surface 13 of the card body 10. Various techniques to provide the visualization area 12 on the surface 13 will be described below. The visualization area 12 may be applied onto the surface 13 of the card body 10 by means of a surface treatment process. The visualization area 12 comprises a light transmitting portion 14 through which a light generated by the light source 11 is transmittable to an outside of the card-like data carrier 1. In the example shown in Fig. 1, the light transmitting portion 14 is represented by a number sequence, wherein the light transmitting portion 14 is directly represented by the shapes of the numbers themselves. The visualization area 12 further comprises a light blocking portion 16 which prevents light generated by the light source 11 from being transmitted to the outside of the card-like data carrier 1. In the example shown in Fig. 1, the light blocking portion 16 is represented by the material portions, for example a printed artwork layer or another opaque layer on the surface 13 of the card body 10. When the light source 11 switches to an activated state, the visualization area 12 is configured to visualize the above-mentioned visualization information to a user of the card-like data carrier based on the light transmitted through the light transmitting portion 14. That is, the user can recognize the numbers represented by the light transmitting portion 14 based on the illumination by the light source.

The card-like data carrier may further comprise a communication interface 30, for example a contact interface 30, for communication with an external device, e.g., a card reader, not shown in Fig. 1.

Fig. 2 shows a cross-sectional view of a card-like data carrier during a surface treatment in a manufacturing process. Prior to the surface treatment, a card body 10 including a layered structure, e.g., a laminated structure, may be provided. The light source 11 (cf. Fig. 1 above) may already be embedded in the card body 10. During the subsequent surface treatment, which is carried out on the surface 13, a printed layer 17 is applied onto a surface 13 of the card body 10. The printed layer 17 may thus be adhered to the surface 13 of the card body 10. A laser device 40 may then generate a laser beam to remove one or more portions of the printed layer 17 from the surface 13 of the card body 10 in order to provide one or more corresponding openings 15 in the printed layer 17. That is, the laser beam may remove the printed layer 17 in certain regions on the surface 13 such that the opening 15 or multiple openings 15 remain within the printed layer 17. The removal of the printed layer 17 in these regions may also be performed using a milling or engraving process.

Through the opening(s) 15, a light generated within the card body 10, e.g., by the light source 11, is transmitted to an outside of the card body 10, thereby making the opening(s) 15 visible to a user. The opening(s) 15 may represent the light transmitting portion 14. The combination of the light transmitting portion 14 and the light blocking portion 16 may represent the visualization area 12 and thus the visualization information mentioned above. It is possible that a user can recognize the opening(s) 15 only when the light source 11 is switched on and that, otherwise, when the light source 11 is switched off, no visualization information is discernable by the user.

Fig. 3 shows a cross-sectional view of a card-like data carrier after a manufacturing process. This manufacturing process used to manufacture this card-like data carrier may be carried out by applying an ink material layer 19 onto the surface 13 of the card body 10, wherein the ink material layer 19 is treated such that an opaque portion 18 of the ink material layer 19 and a transparent portion 20 of the ink material layer 19 are generated. In particular, a heat treatment and/or a laser treatment may be applied to the ink material layer 19 such that a light transmission property of the ink material layer 19 changes. The treated portions of the ink material layer 19 may represent the transparent portion 20 afterwards. In this manner, the light transmitting portion 14 is generated on the surface 13. The non-treated portions of the ink material layer 19 may represent the opaque portion 18 afterwards. The opaque portion 18 may thus be the light blocking portion 16 of the visualization area 12.

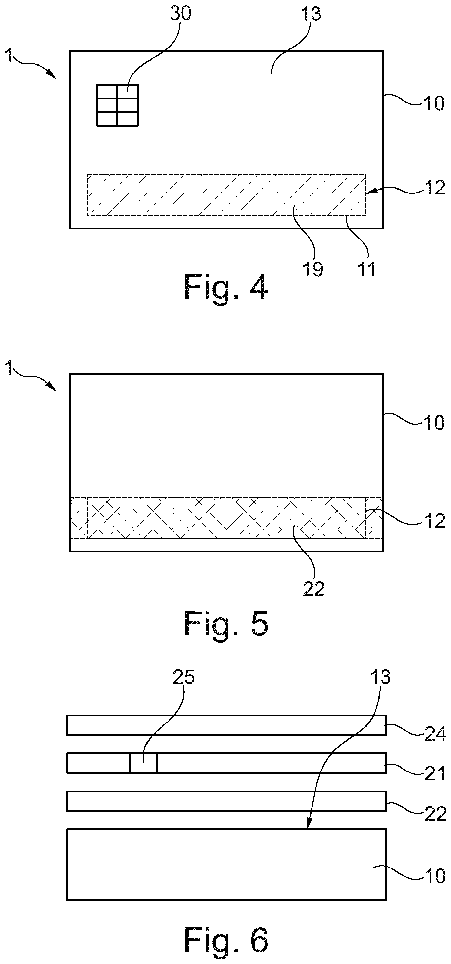

Fig. 4 shows a top view of a card-like data carrier 1 including a visualization area 12 formed by an ink material layer 19. For example, Fig. 4 shows a top view of the card-like data carrier 1 of Fig. 3. The ink material layer 19 is located on the surface 13 of the card body 10, at least in the visualization area 12. In other words, at least the visualization area 12 may comprise the ink material layer 19, wherein a light amount generated by the light source 11 may be transmitted through the transparent position 20 of the ink material layer 19 in the visualization area 12, whereas another light amount generated by the light source 11 may be blocked by the opaque portion 18 of the ink material layer 19 in the visualization area 12 (cf. Fig. 3).

Fig. 5 shows a top view of a card-like data carrier 1 including a visualization area 12 formed by a pigmented layer 22 and a printed layer. The pigmented layer 22 may be applied to the surface 13 of the card body 10. The pigmented layer 22 may have the characteristic according to which the pigmented layer 22 can adjust its material properties when being heated or otherwise activated. For example, the pigmented layer 22 may include pigments that change the color or the light transmission property of the pigmented layer 22. In particular, the pigments may change their state such that the pigmented layer 22 changes from opaque to transparent. The pigments of the pigmented layer 22 may be present in a foil, for example distributed within the entire foil or only within parts thereof.

Fig. 6 now shows a cross-sectional view of the card-like data carrier 1 of Fig. 5 including the visualization area 12 formed by the pigmented layer 22 and the printed layer 21. The pigmented layer 22 is arranged between the card body 10 and the printed layer 21. A further transparent layer 24 may be arranged on top of the printed layer 21 and may represent an overlay or outermost layer of the card-like data carrier 1. An opening 25 may be formed within the printed layer 21, for example using any of the treatment processes described above. A further treatment of the pigmented layer 22 as described above may adjust a property of the pigmented layer 22, at least in a region adjacent the opening 25, to change from an opaque material property to a transparent material property. After the treatment, a light generated by the light source 11 (not shown in Fig. 6) embedded within the card body 10 may pass through the transparent pigmented layer 22 and through the opening 25 in order to provide a personalization information or a logo being made visible in the visualization area 12. As indicated above, the pigmented layer 22 may comprise foil-like structure, wherein the pigmented layer 22 is applied to the surface 13 of the card body 10 in the form of a foil. The foil may cover the entire surface 13 of the card body or only one or more parts thereof.

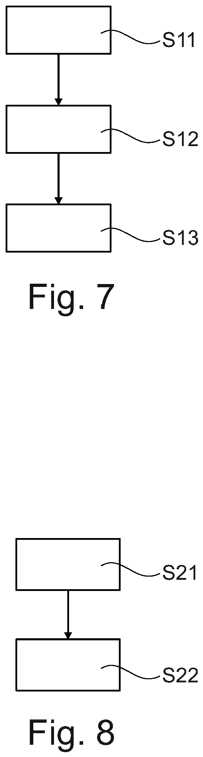

Fig. 7 shows a flow diagram of a method for manufacturing a card-like data carrier, for example the card-like data carrier 1 as described with respect to any of Figures 1 to 6. In a step S11 of the method, a card body 10 with an integrated light source 11 is provided. In another step S12, a printed layer 17 is applied onto a surface 13 of the card body 10. In another step S13, at least one portion of the printed layer 17 is removed from the surface 13 of the card body 10 in order to provide at least one opening 15 in the printed layer 17 through which a light generated within the card body 10 is transmittable to an outside of the card body 10.

The removal step S13 may be a personalization step during the manufacturing process in which personalization information or a logo is applied to the surface 13. A laser device or another device or tool, e.g., a milling tool or an engraving tool, may be used to remove the portion of the printed layer 17, e.g., an artwork or ink layer, in the area of the personalization information which is to be displayed afterwards.

Fig. 8 shows a flow diagram of an alternative method for manufacturing a card-like data carrier, for example the card-like data carrier 1 as described with respect to any of Figures 1 to 6. In a step S21 of the method, a card body 10 with an integrated light source 11 is provided. In another step S22, a printed layer 17 is applied onto a portion of a surface 13 of the card body 10, while maintaining at least one non-printed portion 15 of the surface 13 of the card body 10, wherein the at least one non-printed portion 15 of the surface 13 of the card body 10 is configured to transmit a light generated within the card body 10 to an outside of the card body 10.

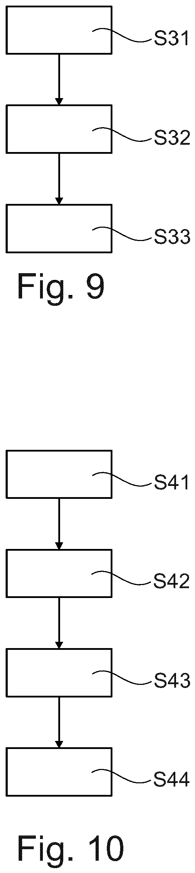

Fig. 9 shows a flow diagram of another alternative method for manufacturing a card-like data carrier, for example the card-like data carrier 1 as described with respect to any of Figures 1 to 6. In a step S31 of the method, a card body 10 with an integrated light source 11 is provided. In another step S32, an ink material layer 19 is applied onto a surface 13 of the card body 10. In another step S33, a portion 20 of the ink material layer 19 is treated in order to change a light transmission property of said portion 20 of the ink material layer 19.

Fig. 10 shows a flow diagram of another alternative method for manufacturing a card-like data carrier, for example the card-like data carrier 1 as described with respect to any of Figures 1 to 6. In a step S41 of the method, a card body 10 with an integrated light source 11 is provided. In another step S42, a pigmented layer 22 is applied onto a surface 13 of the card body 10. In another step S43, a printed layer 21 is provided on the pigmented layer 22 such that the printed layer 21 includes at least one opening 25. In another step S44, the pigmented layer 22 is treated in order to change a light transmission property of the pigmented layer 22.

## Claims

1. A card-like data carrier (1), comprising:
a card body (10) having an integrated light source (11);
a visualization area (12) provided on a surface (13) of the card body (10) by means of a surface treatment process;
wherein the visualization area (12) comprises a light transmitting portion (14) through which a light generated by the light source (11) is transmittable to an outside of the card-like data carrier (1);
wherein the visualization area (12) comprises a light blocking portion (16) which is configured to prevent a light generated by the light source (11) from being transmitted to the outside of the card-like data carrier (1);
wherein, when the light source (11) is in an activated state, the visualization area (12) is configured to visualize an information of the card-like data carrier (1) based on the light transmitted through the light transmitting portion (14).

2. The card-like data carrier (1) of claim 1,
wherein the visualization area (12) is a personalization area (12) which is configured to visualize a personalization information when the light source (11) is in the activated state.

3. The card-like data carrier (1) according to any one of the preceding claims,
wherein the light blocking portion (16) of the visualization area (12) is defined by a printed layer (17);
wherein the light transmitting portion (14) of the visualization area is defined by an opening (15) in the printed layer (17).

4. The card-like data carrier (1) according to claim 3,
wherein the opening (15) in the printed layer (17) is provided by means of a milling process and/or an engraving process.

5. The card-like data carrier (1) according to any one of the preceding claims,
wherein the light blocking portion (16) of the visualization area (12) is defined by an opaque portion (18) of an ink material layer (19);
wherein the light transmitting portion (14) of the visualization area (12) is defined by a transparent portion (20) of the ink material layer (19).

6. The card-like data carrier (1) according to any one of the preceding claims,
wherein the visualization area (12) comprises a printed layer (21) and a pigmented layer (22);
wherein the pigmented layer (22) is arranged between the card body (10) and the printed layer (21).

7. A method for manufacturing a card-like data carrier (1), comprising:
providing a card body (10) with an integrated light source (11, S11);
applying a printed layer (17) onto a surface (13) of the card body (10, S12);
removing at least one portion of the printed layer (17) from the surface (13) of the card body (10) in order to provide at least one opening (15) in the printed layer (17) through which a light generated within the card body (10) is transmittable to an outside of the card body (10, S13).

8. A method for manufacturing a card-like data carrier (1), comprising:
providing a card body (10) with an integrated light source (11, S21);
applying a printed layer (17) onto a portion of a surface (13) of the card body (10), while maintaining at least one non-printed portion (15) of the surface (13) of the card body (10, S22);
wherein the at least one non-printed portion (15) of the surface (13) of the card body (10) is configured to transmit a light generated within the card body (10) to an outside of the card body (10).

9. A method for manufacturing a card-like data carrier (1), comprising:
providing a card body (10) with an integrated light source (11, S31);
applying an ink material layer (19) onto a surface (13) of the card body (10, S32);
treating a portion (20) of the ink material layer (19) to change a light transmission property of said portion (20) of the ink material layer (19, S33).

10. A method for manufacturing a card-like data carrier (1), comprising:
providing a card body (10) with an integrated light source (11, S41);
providing a pigmented layer (22) onto a surface (13) of the card body (10, S42);
providing a printed layer (21) onto the pigmented layer (22) such that the printed layer (21) includes at least one opening (25, S43);
treating the pigmented layer (22) to change a light transmission property of the pigmented layer (22, S44).

## Amended claims

### Amended claims in accordance with Rule 137(2) EPC.

1. A card-like data carrier (1), comprising:
a card body (10) having an integrated light source (11);
a visualization area (12) provided on a surface (13) of the card body (10) by means of a surface treatment process;
wherein the visualization area (12) comprises a light transmitting portion (14) through which a light generated by the light source (11) is transmittable to an outside of the card-like data carrier (1);
wherein the visualization area (12) comprises a light blocking portion (16) which is configured to prevent a light generated by the light source (11) from being transmitted to the outside of the card-like data carrier (1);
wherein, when the light source (11) is in an activated state, the visualization area (12) is configured to visualize an information of the card-like data carrier (1) based on the light transmitted through the light transmitting portion (14)
wherein the light blocking portion (16) of the visualization area (12) is defined by a printed layer (17);
wherein the light transmitting portion (14) of the visualization area is defined by an opening (15) in the printed layer (17); and
wherein the opening (15) in the printed layer (17) is provided by means of a milling process and/or an engraving process.

2. The card-like data carrier (1) of claim 1,
wherein the visualization area (12) is a personalization area (12) which is configured to visualize a personalization information when the light source (11) is in the activated state.

3. The card-like data carrier (1) according to any one of the preceding claims,
wherein the light blocking portion (16) of the visualization area (12) is defined by an opaque portion (18) of an ink material layer (19);
wherein the light transmitting portion (14) of the visualization area (12) is defined by a transparent portion (20) of the ink material layer (19).

4. The card-like data carrier (1) according to any one of the preceding claims,
wherein the visualization area (12) comprises a printed layer (21) and a pigmented layer (22);
wherein the pigmented layer (22) is arranged between the card body (10) and the printed layer (21).

5. A method for manufacturing a card-like data carrier (1), comprising:
providing a card body (10) with an integrated light source (11, S11);
applying a printed layer (17) onto a surface (13) of the card body (10, S12);
removing at least one portion of the printed layer (17) from the surface (13) of the card body (10) in order to provide at least one opening (15) in the printed layer (17) through which a light generated within the card body (10) is transmittable to an outside of the card body (10, S13);
wherein the removal of the printed layer (17) is performed using a milling or an engraving process.

6. A method for manufacturing a card-like data carrier (1), comprising:
providing a card body (10) with an integrated light source (11, S31);
applying an ink material layer (19) onto a surface (13) of the card body (10, S32);
treating a portion (20) of the ink material layer (19) to change a light transmission property of said portion (20) of the ink material layer (19, S33).

7. A method for manufacturing a card-like data carrier (1), comprising:
providing a card body (10) with an integrated light source (11, S41);
providing a pigmented layer (22) onto a surface (13) of the card body (10, S42);
providing a printed layer (21) onto the pigmented layer (22) such that the printed layer (21) includes at least one opening (25, S43);
treating the pigmented layer (22) to change a light transmission property of the pigmented layer (22, S44).
